# EUROPÄISCHE PATENTANMELDUNG

(11) **EP 4 513 070 A1**
(43) Veröffentlichungstag der Anmeldung: **26.02.2025**
(21) Anmeldenummer: 24195226.6
(22) Anmeldetag: 19.08.2024
(51) Int. Cl.: F16L 11/12, C08K 3/08

(54) **NACHHALTIGER SCHLAUCH ODER NACHHALTIGE DICHTUNG MIT DETEKTIERBARER SCHICHT**

(30) Priorität: 24.08.2023 DE 102023207621
(71) Anmelder: ContiTech Deutschland GmbH, 30175 Hannover (DE)
(72) Erfinder: Dr. Onken, Kristian, 34497 Korbach (DE); Dr. Borvitz, Dieter, 30175 Hannover (DE)
(74) Vertreter: Continental Corporation

(57) **Zusammenfassung**

Beschrieben wird ein Schlauch oder eine Dichtung, umfassend mindestens eine Schicht, die mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, dadurch gekennzeichnet, dass der Schlauch oder die Dichtung mindestens einen biobasierten, biologisch abbaubaren und/oder bio-attributed Rohstoff umfasst, die Verwendung eines berührungslos detektierbaren Markers, der mindestens einen mittels Röntgenstrahlung und/oder einem elektromagnetischen Feld detektierbaren Stoff umfasst, zur Detektion der Abnutzung eines solchen Schlauches oder einer solchen Dichtung und ein Verfahren zur Detektion der Abnutzung eines solchen Schlauches oder einer solchen Dichtung.

## Beschreibung

Die vorliegende Erfindung betrifft einen Schlauch oder Dichtung, umfassend mindestens eine Schicht, die mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, wobei der Schlauch oder die Dichtung mindestens einen biobasierten, biologisch abbaubaren und/oder bio-attributed Rohstoff umfasst, die Verwendung eines berührungslos detektierbaren Markers zur Detektion der Abnutzung eines solchen Schlauches oder einer solchen Dichtung, sowie ein Verfahren zur Detektion der Abnutzung eines solchen Schlauches oder einer solchen Dichtung.

Üblicherweise werden flexible Schläuche bzw. Dichtungen aus Kunststoffen, Elastomeren, thermoplastischen Elastomeren oder einer Kombination daraus hergestellt.

Diese derzeit verwendeten Schläuche, insbesondere Lebensmittel- und Trinkwasserschläuche, bzw. Dichtungen die in solchen Systemen eingesetzt werden, haben den Nachteil, dass die üblicherweise verwendeten Polymere mit den gängigen Inline-Detektionsverfahren, wie Röntgendetektion oder Metalldetektion, aufgrund der geringen Polymerdichte nicht oder nur schwierig erfasst werden können.

Eine einfache Polymer-Detektierbarkeit ist jedoch vorteilhaft, da bei einer ungewollten Ablösung der Schlauchseele bzw. einer alternden und sich auflösenden Dichtung eine Kontaminierung des Mediums, das den Schlauch oder die Dichtung durchläuft, erfolgen kann, was zu hohen Folgekosten bedingt durch mögliche Rückrufaktionen, Reinigungsaktionen sowie einen Absatzverlust durch den daraus resultierenden Imageschaden führen kann.

Während Metallpartikel in einem Produkt relativ einfach mit einem Metalldetektor und nichtmetallische Verunreinigungen mit hoher Dichte, wie z.B. Glas, Steine oder Nussschalen, relativ einfach mit einem Röntgendetektor erfasst werden können, bleibt die Detektion von den in Schläuchen oder Dichtungen üblicherweise eingesetzten Polymeren, wie Elastomeren, thermoplastischen Elastomeren und Kunststoffen, weiterhin problematisch.

Ein weiterer Aspekt dieser Problematik ist, dass beispielsweise Schläuche oder Dichtungen für den Lebensmittel- und Trinkwasserbereich nur aus Substanzen gefertigt werden dürfen, die den dafür vorgesehenen gesetzlichen Regularien entsprechen bzw. in entsprechenden Positivlisten aufgeführt sind. Dies schränkt den Schlauch- bzw. Dichtungshersteller in seiner Materialauswahl stark ein, um eine solche Detektierbarkeit zu erreichen.

Ferner ist nachteilig, dass bei den bislang bekannten Schläuchen und Dichtungen, umfassend detektierbare Marker, Rohstoffe, insbesondere Polymere (z.B. Elastomere und oder Kunststoffe), eingesetzt werden, für die ein großer Anteil fossiler Rohstoffe, wie z.B. Erdöl, verwendet werden oder für deren Herstellung ein hoher Energieeinsatz notwendig ist und diese somit nicht nachhaltig im Sinne von Ressourcenverbrauch, Kreislaufwirtschaft (Recycling), CO₂-Emmissionen, etc. sind.

Die Aufgabe der vorliegenden Erfindung ist es, die aus dem Stand der Technik bekannten Nachteile zu beheben. Insbesondere soll ein Schlauch oder eine Dichtung aus einem Material bereitgestellt werden, das mit den gängigen Inline-Detektionsverfahren, wie Röntgendetektion oder Metalldetektion, einfach und sicher detektiert werden kann. Zudem soll das Material für alle gängigen Anwendungen im Lebensmittel- und Trinkwasserbereich einsetzbar sein. Insbesondere sollen ferner die Nachteile der Nutzung fossiler Rohstoffe bzw. die Nachteile der Nutzung von Rohstoffen mit negativer Umweltbilanz (hoher Energieverbrauch, Müllentstehung, CO₂-Emissionen) verringert oder behoben werden.

Obige Aufgabe wird durch einen Schlauch oder eine Dichtung gemäß Anspruch 1 gelöst, d.h. durch einen Schlauch oder eine Dichtung, umfassend mindestens eine Schicht, die mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, dadurch gekennzeichnet, dass der Schlauch oder die Dichtung mindestens einen biobasierten, biologisch abbaubaren und/oder bio-attributed Rohstoff umfasst.

Vorteilhafte Weiterbildungen sind in den Unteransprüchen beschrieben.

Nachfolgend werden zahlreiche spezifische Details erörtert, um ein umfassendes Verständnis des vorliegenden Gegenstands zu ermöglichen. Es ist jedoch für den Fachmann offensichtlich, dass der Gegenstand auch ohne diese spezifischen Details praktiziert und nachgearbeitet werden kann.

Alle Merkmale einer Ausführungsform können mit Merkmalen einer anderen Ausführungsform kombiniert werden, wenn die Merkmale der verschiedenen Ausführungsformen vereinbar sind.

Die in der Beschreibung der vorliegenden Offenbarung verwendete Terminologie dient nur der Beschreibung bestimmter Ausführungsformen und ist nicht als Einschränkung des Gegenstands zu verstehen. Wie in der vorliegenden Beschreibung und den Ansprüchen verwendet, sind die Singularformen "ein", "eine" und "die" so zu verstehen, dass diese auch die Pluralformen einschließen, sofern der Kontext nicht eindeutig etwas Anderes vorgibt. Dies gilt auch umgekehrt, d.h. die Pluralformen schließen auch die Singularformen ein. Es versteht sich auch, dass der Begriff "und/oder", wie er hier verwendet wird, sich auf alle möglichen Kombinationen von einem oder mehreren der zugehörigen aufgelisteten Elemente bezieht und diese einschließt. Es versteht sich weiterhin, dass die Begriffe "beinhaltet", "einschließlich", "umfasst" und/oder "umfassend", wenn sie in der vorliegenden Beschreibung und den Ansprüchen verwendet werden, das Vorhandensein der angegebenen Merkmale, Schritte, Operationen, Elemente und/oder Komponenten spezifizieren, aber nicht das Vorhandensein oder Hinzufügen eines oder mehrerer anderer Merkmale, Schritte, Operationen, Elemente, Komponenten und/oder Gruppen davon ausschließen.

In der vorliegenden Beschreibung und den Ansprüchen können die Begriffe "beinhaltet", "umfasst" und/oder "umfassend" auch "bestehend aus" bedeuten, d.h. das Vorhandensein oder Hinzufügen eines oder mehrerer anderer Merkmale, Schritte, Operationen, Elemente, Komponenten und/oder Gruppen wird ausgeschlossen.

Erfindungsgemäß ist ein Schlauch oder eine Dichtung, umfassend mindestens eine Schicht, die mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, dadurch gekennzeichnet, dass der Schlauch oder die Dichtung mindestens einen biobasierten, biologisch abbaubaren und/oder bio-attributed Rohstoff umfasst.

Ein biobasierter Rohstoff wird gemäß der vorliegenden Offenbarung dahingehend verstanden, dass ein Bestandteil oder mehrere Bestandteile des Rohstoffes auf nachwachsenden Ressourcen basieren oder der Rohstoff vollständig aus nachwachsenden Ressourcen besteht oder daraus hergestellt werden kann.

Ein biologisch abbaubarer Rohstoff wird gemäß der vorliegenden Offenbarung dahingehend verstanden, dass der Rohstoff durch Zerfallsprozesse, insbesondere natürliche Zerfallsprozesse, mindestens teilweise, vorzugsweise vollständig abgebaut werden kann und in den natürlichen Stoffkreislauf zurückgeführt werden kann.

Ein bio-attributed Rohstoff wird gemäß der vorliegenden Offenbarung dahingehend verstanden, dass bei der Herstellung des Rohstoffs anteilig biobasierende Materialien (wie vorstehend definiert eingesetzt werden, wobei die Menge dieser in der Regel über Zertifikate bestätigt wird.

Unter Rohstoff wird hier vorzugsweise jeder Stoff verstanden, der beim Aufbau bzw. der Herstellung der erfindungsgemäßen Schläuche oder Dichtungen zum Einsatz kommt. Insbesondere umfassen Rohstoffe im Sinne der vorliegenden Offenbarung Polymere, bzw. Monomere, die in diesen Polymeren vorhanden sind, und übliche Additive, wie beispielsweise Siliziumdioxid (Silica/Kieselsäure), Kaolin, Titandioxid, Fettsäuren, Weichmacher, Gleitmittel, Geruchsabsorber, antimikrobielle Substanzen, organische + anorganische Farbpigment, Haftvermittler, Verarbeitungshilfsmittel, Flammschutzmittel, Alterungsschutzmittel, Metalloxide+ Metallhydroxide, Verzögerer, Aktivatoren, Faktis, Graphit, Carbon Nanotubes, Kohlefasern und/oder Ruß.

Unter Schlauch wird ein vorzugsweise flexibler länglicher Hohlkörper mit vorzugsweise im Wesentlichen rundem Querschnitt verstanden. Der Grad der Flexibilität ist nicht beschränkt. Ein dichter Schlauch kann beispielsweise als Leitung zur Förderung fester, flüssiger und gasförmiger Stoffe verwendet werden, als deren Behälter dienen oder durch ein Medium im Innern erwünschte Eigenschaften erhalten. Ein Schlauch kann auch als Schutzummantelung, beispielsweise zur Isolation oder zur Wärmedämmung Anwendung finden. Dabei muss ein Schlauch, der etwa zur Isolation oder Wärmedämmung eingesetzt wird oder als Kabelschutz dient, nicht vollständig dicht sein. Ein nicht vollständig dichter Schlauch kann auch als Filterschlauch eingesetzt werden. Dabei wird der Schlauch durch die gewollte Porosität der Innenwand als Filterschlauch verwendet.

Unter Dichtung werden in der Regel Elemente oder Konstruktionen verstanden, die die Aufgabe haben, ungewollte Stoffübergänge von einem Raum in einen anderen zu verhindern oder zu begrenzen bzw. eine Schicht aus einem geeigneten Material, die zwischen zwei Teile eines Geräts oder einer Vorrichtung zur Abdichtung gelegt wird. Vorzugsweise wird eine Dichtung zwischen zwei Schläuchen oder zwei Rohren oder anderen Hohlkörpern montiert, um einen Austritt von einem Medium, dass diese Schläuche, Rohre oder sonstigen Hohlkörper durchströmt, zu verhindern.

Der erfindungsgemäße Schlauch oder die Dichtung weist mindestens einen berührungslos detektierbaren Marker auf. Unter berührungslos detektierbar wird ein Marker verstanden, der ohne physischen Kontakt zwischen Messgerät und Marker durch das Messgerät detektiert werden kann. Der berührungslos detektierbare Marker umfasst ein mittels Röntgenstrahlung und/oder eines elektromagnetischen Feldes detektierbaren Stoff.

Damit ein Stoff mittels Röntgenstrahlung detektierbar ist, weist er vorzugsweise eine Dichte von mehr als 1 g/cm³ auf.

Ein mittels eines elektromagnetischen Feldes detektierbarer Stoff muss magnetisch sein. Unter einem magnetischen Stoff versteht man vorzugsweise solche Werkstoffe, die unter Einwirkung eines äußeren Magnetfeldes auf Dauer magnetisiert werden. Insbesondere kommen ferromagnetische und ferrimagnetische Materialien in Frage aber auch Antiferromagnetika, Paramagnetika und Superparamagnetika.

Der erfindungsgemäße Schlauch oder die Dichtung ist vorzugsweise ein einschichtiger Schlauch oder eine einschichtige Dichtung.

Insbesondere bevorzugt ist hierbei eine einschichtige Dichtung.

Der erfindungsgemäße Schlauch oder die Dichtung ist in einer anderen Ausführungsform vorzugsweise ein mehrschichtiger Schlauch oder eine mehrschichtige Dichtung. Die einzelnen Schichten können aus Materialien unterschiedlicher chemischer Zusammensetzung aufgebaut sein. Mehrschichtige Schläuche oder mehrschichtige Dichtungen haben den Vorteil, dass sie so aufgebaut werden können, dass die verwendeten Materialien jeweils optimal auf das Medium, das durch den Schlauch bzw. die Dichtung läuft, sowie auf das Medium, das den Schlauch bzw. die Dichtung von außen umgibt, angepasst werden können.

Es ist bevorzugt, dass der Schlauch oder die Dichtung mindestens 2, 3 oder 4 Schichten aufweist, wobei 2 oder 3 Schichten besonders bevorzugt sind.

Der biobasierte, biologisch abbaubare und/oder bio-attributed Rohstoff kann dabei in einer oder in mehreren, beispielsweise in 2, 3 oder 4, oder auch in allen Schichten des Schlauchs oder der Dichtung vorhanden sein.

Der mindestens eine berührungslos detektierbare Marker kann vorzugsweise in einer Schicht, in mehreren Schichten, beispielsweise in 2, 3 oder 4, aber auch in allen Schichten des erfindungsgemäßen Schlauches oder der erfindungsgemäßen Dichtung vorkommen.

Der erfindungsgemäße Schlauch oder die erfindungsgemäße Dichtung ist vorzugsweise dadurch gekennzeichnet, dass der berührungslos detektierbare Marker mindestens einen mittels Röntgenstrahlung und/oder einem elektromagnetischen Feld detektierbaren Stoff mit einer mittleren Partikelgröße d90 von 0,2 bis 500 µm, bevorzugt von 0,25 bis 300 µm und besonders bevorzugt von 2 bis 150 µm umfasst.

Die Partikelgröße wird durch die Cyclosizer Methode gemäß DIN EN ISO 1248:2008-06 bestimmt.

Schläuche oder Dichtungen, die einen mittels Röntgenstrahlung und/oder einem elektromagnetischen Feld detektierbaren Stoff mit einer kleineren Partikelgröße, aufweisen, haben den Nachteil, dass durch die relativ kleinen Partikel diese mit einem handelsüblichen Detektor nur schwer zu detektieren sind.

Schläuche oder Dichtungen, die einen mittels Röntgenstrahlung und/oder einem elektromagnetischen Feld detektierbaren Stoff mit einer größeren Partikelgröße, aufweisen, haben den Nachteil, dass durch die Einarbeitung von relativ großen Partikeln in die Schlauchmatrix bzw. die Dichtungsmatrix die mechanischen Eigenschaften des Elastomers bzw. des Schlauches bzw. der Dichtung herabgesetzt wird.

Der erfindungsgemäße Schlauch oder die erfindungsgemäße Dichtung sind ferner vorzugsweise dadurch gekennzeichnet, dass der biobasierte und/oder bio-attributed Rohstoff mindestens ein Polymer umfasst.

Vorzugsweise umfasst dieses mindestens eine Polymer einen Kunststoff, einen Kautschuk, ein Elastomer und/oder ein thermoplastisches Elastomer.

Der unvulkanisierte (polymere) Rohstoff wird hierbei vorzugsweise als Kautschuk, das daraus resultierende Vulkanisat vorzugsweise als Elastomer bezeichnet. Dabei kann das Polymer vorzugsweise komplett aus biobasierten Rohstoffen aufgebaut sein oder es kann einzelne Bestandeile enthalten (Monomere), die biobasierte Rohstoffe umfassen oder daraus bestehen.

Einige nicht einschränkende Beispiele für biobasierte und/oder bio-attributed Rohstoffe sind ein oder mehrere Pflanzenmaterialien ausgewählt aus der Gruppe, umfassend Zuckerrohr, Zuckerrübe, Ahorn, Dattelpalme, Zuckerpalme, Sorghum, amerikanische Agave, Mais, Weizen, Gerste, Reis, Kartoffel, Maniok, Süßkartoffel, Algen, Obst, Materialien, die Cellulose umfassen, Wein, Materialien, die Hemicellulosen umfassen, Materialien, die Lignin umfassen, Holz, Stroh, Maisstroh, Holzreste, Papier und Kombinationen davon, bzw. aus diesen Materialen gewonnene Stoffe.

Insbesondere geeignet sind hierbei EPDM- und/oder EPR-Polymere, die unter Verwendung von Ethylenmonomer gebildet werden, das aus einer oder mehreren erneuerbaren Quellen stammt. Beispiele für solche erneuerbaren Quellen sind vorstehend genannt.

Beispiele für geeignete Polymere, umfassen das Produkt Keltan ECO (Arlanexo), das einen Ethylenanteil auf Zuckerrohr enthält (biobasierend).

Ebenfalls geeignet sind SBR-Polymere, wie beispielsweise das Produkt Europrene 1502A (Versalis), das einen zugesicherten Bio-Anteil enthält (bioattributed).

Diese Polymere können beispielsweise mit Füllstoffen wie Ruß, Calciumcarbonat, Talk, Ton oder hydratisiertes Silica oder Mischungen vermischt werden, wobei diese Füllstoffe ebenfalls biobasierend und/oder bio-attributed sein können.

Der erfindungsgemäße Schlauch oder die erfindungsgemäße Dichtung sind ferner vorzugsweise dadurch gekennzeichnet, dass der biologisch abbaubare Rohstoff mindestens ein biologisch abbaubares Polymer, vorzugsweise ausgewählt aus der Gruppe, umfassend Polyhydroxyalkanoat, Polycaprolacton, Polymilchsäure, Polybutylensuccinat, Polybutylensuccinat-co-butylenadipat, Polybutylenadipatterephthalat, Mischungen aus zwei oder mehrere der zuvor genannten Polymere und Reaktionsprodukte von zwei oder mehr der zuvor genannten Polymere.

Beispielsweise enthält das mindestens eine biologisch abbaubare Polymer vorzugsweise Polyhydroxyalkanoate, und die Polyhydroxyalkanoate bestehen aus etwa 65 (vorzugsweise etwa 70) bis etwa 99,5 Molprozent Hydroxybutyrateinheiten und aus etwa 0,5 bis etwa 30 (vorzugsweise etwa 35) Molprozent Hydroxyhexanoat-Einheiten.

In einigen Fällen können die Polyhydroxyalkanoate ein Terpolymer sein.

Beispielsweise können die Polyhydroxyalkanoate aus Monomerresten von 3-Hydroxybutyrat, Monomerresten von 3-Hydroxyvalerat und Monomerresten von 3-Hydroxyhexanoat bestehen.

Beispielsweise umfasst das mindestens eine biologisch abbaubare Polymer Polyhydroxyalkanoate mit einem gewichtsmittleren Molekulargewicht von etwa 1000 Dalton bis etwa 2,5 Millionen Dalton.

Ferner bevorzugt enthält das mindestens eine biologisch abbaubare Polymer vorzugsweise Polyhydroxyalkanoate mit einem gewichtsmittleren Molekulargewicht von etwa 10.000 Dalton bis etwa 7,5 Millionen Dalton.

Vorzugsweise umfasst das mindestens eine biologisch abbaubare Polymer vorzugsweise ein Reaktionsprodukt, das durch reaktive Extrusion von Polyhydroxyalkanoaten und einem zweiten biologisch abbaubaren Polymer gebildet wird.

Vorzugsweise enthält das mindestens eine biologisch abbaubare Polymer vorzugsweise Polycaprolacton und/oder Polymilchsäure mit einem gewichtsmittleren Molekulargewicht von 10.000 Dalton bis etwa 300.000 Dalton.

Ferner bevorzugt ist ein biologisch abbaubares Polymer, das aus der Gruppe ausgewählt ist, die Polymilchsäure, Polybutylensuccinat, Polybutylensuccinat-co-butylenadipat, Polybutylenadipatterephthalat und Mischungen davon umfasst.

Der erfindungsgemäße Schlauch oder die erfindungsgemäße Dichtung sind ferner vorzugsweise dadurch gekennzeichnet, dass der Schlauch oder die Dichtung einen Druckträger, insbesondere ein Garn und/oder ein Geflecht.

Der erfindungsgemäße Schlauch oder die erfindungsgemäße Dichtung ist vorzugsweise dadurch gekennzeichnet, dass der Schlauch bzw. die Dichtung einen oder mehrere Druckträger, insbesondere ein Garn und/oder ein Geflecht umfasst. Unter einem Druckträger versteht man eine Vorrichtung, die in den Schlauch bzw. die Dichtung eingearbeitet wird, sodass der Schlauch bzw. die Dichtung einem höheren Innendruck widerstehen kann, ohne zu platzen und/oder aufzureißen. Der Druckträger kann in oder zwischen jede Schicht des Schlauches oder der Dichtung, vorzugsweise nicht in die Innenschicht, eingearbeitet werden und/oder als Umlage um den Schlauch oder die Dichtung gelegt werden. Zudem kann in den Schlauch oder der Dichtung eine Wendel aus Kunststoff oder Stahl eingearbeitet werden, damit auch ein Betrieb im Vakuum möglich ist.

Der erfindungsgemäße Schlauch oder die erfindungsgemäße Dichtung ist vorzugsweise dadurch gekennzeichnet, dass der Druckträger mindestens eine biobasierten, biologisch abbaubaren und/oder bio-attributed Faser, vorzugsweise eine Naturfaser und/oder eine Polymilchsäurefaser, umfasst.

Weitere geeignete Materialien für den Druckträger umfassen Vinylonfasern, Reyonfasern, Hanffasern, Polyesterfasern, Polyvinylacetatfasern, Polyamidfasern, Nylonfasern, Aramidfasern, Metalldraht oder Metalllegierungsdraht. Hierbei sind wiederum solche Materialien bevorzugt, die mindestens zu einem Teil einen biobasierten, biologisch abbaubaren und/oder bio-attributed Rohstoff umfassen oder daraus bestehen.

Der Druckträger kann geflochten, in eine Spirale gewickelt oder in mehrere spiralförmige Schichten gewickelt, die in entgegengesetzte Richtungen gewickelt sind, sein.

Der erfindungsgemäße Schlauch oder die erfindungsgemäße Dichtung ist vorzugsweise dadurch gekennzeichnet, dass die Gewichtsmenge des biobasierten, biologisch abbaubaren und/oder bio-attributed Rohstoff bis zu etwa 100 Gew.-% oder bis zu 99 Gew.-% oder bis zu 98 Gew.-% oder bis zu 97 Gew.- % oder bis zu 96 Gew.-% oder bis zu 95 Gew.-% oder bis zu 90 Gew.-% oder bis zu 85 Gew.-% oder bis zu 80 Gew.-% oder bis zu 75 Gew.-% oder bis zu 70 Gew.- % oder bis zu 65 Gew.-% oder bis zu 60 Gew.-% oder bis zu 55 Gew.-% oder bis zu 50 Gew.-%, bezogen auf das Gesamtgewicht, beträgt

Der erfindungsgemäße Schlauch oder die erfindungsgemäße Dichtung ist vorzugsweise dadurch gekennzeichnet, dass die Gewichtsmenge des biobasierten, biologisch abbaubaren und/oder bio-attributed Rohstoff mehr als 0,1 Gew.-% oder mehr als 0,5 Gew.-% oder mehr al 1 Gew.-% oder mehr als 5 Gew.- % oder mehr als 10 Gew.-% oder mehr als 15 Gew.-% mehr als 20 Gew.-% oder mehr als 25 Gew.-% oder mehr als 30 Gew.-% oder mehr als 35 Gew.-% mehr als 40 Gew.-% oder mehr als 45 Gew.-% oder mehr als 50 Gew.-%, bezogen auf das Gesamtgewicht, beträgt.

Zusätzlich oder alternative zu den vorstehend genannten Polymeren können auch Polymere eingesetzt werden, die keinen biobasierten, biologisch abbaubaren und/oder bio-attributed Rohstoff enthalten.

Es versteht sich, dass in solchen Fällen der biobasierte, biologisch abbaubare und/oder bio-attributed Rohstoff in anderer Form, beispielsweise als Additiv, in dem erfindungsgemäßen Schlauch oder in der erfindungsgemäßen Dichtung vorliegt.

Geeignete Polymere umfassen vorzugsweise einen Kunststoff, ein Elastomer und/oder ein thermoplastisches Elastomer.

Kunststoffe sind Stoffe, deren Grundbestandteile synthetisch oder halbsynthetisch erzeugte Polymere vorzugsweise mit organischen Gruppen sind.

Elastomere sind Polymere mit gummielastischem Verhalten, die bei 20 °C wiederholt mindestens auf das Zweifache ihrer Länge gedehnt werden können und nach Aufhebung des für die Dehnung erforderlichen Zwanges sofort wieder annähernd ihre Ausgangsdimensionen einnehmen. Elastomere sind weitmaschige, in der Regel vernetzte, hochpolymere Werkstoffe, die bei der Gebrauchstemperatur aufgrund der Verknüpfung der einzelnen Polymerketten an den Vernetzungsstellen nicht viskos fließen können.

Elastomere werden im Allgemeinen durch Vulkanisation von natürlichen Kautschuken (Naturkautschuken) und synthetischen Kautschuken (Synthesekautschuken) hergestellt. Unter Vulkanisation versteht man die Überführung von plastischen, kautschukartigen, ungesättigten oder gesättigten Polymeren in den gummielastischen Zustand, vorzugsweise durch Vernetzung mit Schwefel bzw. Schwefelverbindungen. Dabei werden die einzelnen Polymerketten irreversibel durch kovalente Bindungen miteinander verbunden.

Bei manchen Synthesekautschuken werden auch schwefelfreie Vernetzer als Vulkanisationsmittel verwendet, wie z. B. Peroxide, Harze, Bisphenole, Metalloxide (MgO, ZnO). Zudem gibt es auch rein physikalische Methoden der Vernetzung (z.B. mittels energiereicher Strahlung). Ferner sind additionsvernetzende Systeme wie z.B. platin-katalyiserte Systeme möglich.

Thermoplastische Elastomere sind Stoffe, die sich bei Raumtemperatur vergleichbar den klassischen Elastomeren verhalten, sich jedoch unter Wärmezufuhr plastisch verformen lassen und somit ein thermoplastisches Verhalten zeigen. Thermoplastische Elastomere weisen im Idealfall eine Kombination der Gebrauchseigenschaften von Elastomeren und den Verarbeitungseigenschaften von Thermoplasten auf. Dies kann dadurch erreicht werden, dass in den Makromolekülen der entsprechenden Kunststoffe gleichzeitig weiche und elastische Komponenten mit hoher Dehnbarkeit und niedriger Glasübergangstemperatur sowie harte, kristallisierbare Segmente mit geringer Dehnbarkeit und hoher Glasübergangstemperatur auftreten (physikalische Vernetzung). Die Weich- und Hartsegmente müssen miteinander unverträglich sein und als individuelle Phasen vorliegen. Das kann erreicht werden, indem weiche Elastomerpartikel in einer harten Polymermatrix eingelagert werden oder indem Blockcopolymere mit unverträglichen harten und weichen Segmenten eingesetzt werden. Kennzeichnend für thermoplastische Elastomere sind somit Vernetzungsstellen, die durch Erwärmen reversibel spaltbar sind. Oberhalb der entsprechenden Temperatur verhalten sich die Polymere wie Thermoplaste, unterhalb wie Elastomere. Damit entspricht das Gebrauchsverhalten demjenigen von Elastomeren und das Verarbeitungsverhalten demjenigen von Thermoplasten.

Der in dem erfindungsgemäßen Schlauch eingesetzte Kunststoff ist im Wesentlichen nicht beschränkt, sondern umfasst im Wesentlichen alle gängigen kommerziell erhältlichen Kunststoffe. Es ist jedoch bevorzugt, wenn der mindestens eine Kunststoff ausgewählt ist aus der Gruppe bestehend aus Polyethylen, ultrahochmolekularem Polyethylen (UPE), Polypropylen, Polyamid, Polyester, aromatische Polyester, Polyvinylchlorid, Polyethersulfon, Polyetheretherketon (PEEK), Polyketon (PK), Ethylen-Tetrafluorethylen (ETFE), chlorierte Fluorkunststoffe (PCTFE, ECTFE), Tetrafluorethylen-Hexafluorpropylen-Vinylidenfluorid-Terpolymer (THV), Polyvinylidenfluorid (PVF), Polyvinylidendifluorid (PVDF), Perfluoralkoxy-Polymer (MFA + PFA), Tetrafluorethylen-Hexafluorpropylen-Copolymer (FEP), Polytetrafluorethylen (PTFE), sowie Mischungen und Copolymeren davon. Die Kunststoffe können zudem weitere Zusatzstoffe enthalten (z.B. Antistatika, Färbemittel, Geruchsabsorber, Haftvermittler, usw.)

Das in dem erfindungsgemäßen Schlauch eingesetzte Elastomer ist im Wesentlichen nicht beschränkt, sondern umfasst im Wesentlichen alle gängigen kommerziell erhältlichen Elastomere. Es ist jedoch bevorzugt, wenn das mindestens eine Elastomer ausgewählt ist aus der Gruppe bestehend aus Acrylatkautschuken (AEM), Ethylen-Vinylacetat-Kautschuken (EVA), Polybutadien (BR), Chlorsulfoniertes Polyethylen (CSM), Chloriertes Polyethylen (CM), Epichlorhydrin-Kautschuken (ECO), Chloroprenkautschuken (CR), Polyisopren (IR), Fluorkautschuk (FPM, FKM, FFKM), Styrol-Butadien-Kautschuken (SBR), Isobutylen-Isopren-Kautschuken (IIR), halogenierten Isobutylen-Isopren-Kautschuken (CIIR + BIIR), Acrylnitril-Butadien-Kautschuken (NBR), teilhydrierten oder vollständig hydrierten Acrylnitrilbutadien-Kautschuken (HNBR), Verschnitte aus NBR mit PVC (NBR-PVC), teilhydrierten oder vollständig hydrierten carboxylierten Acrylnitrilbutadien-Kautschuken, Ethylen-Propylen-Dien-Kautschuken (EPDM), Ethylen-Propylen-Kautschuken (EPM), Naturkautschuk (NR), bromierten Isobutylen-Paramethylstyrol-Kautschuken, Silikonkautschuken (MVQ), sowie Mischungen, Verschnitte und Copolymeren davon.

Das in dem erfindungsgemäßen Schlauch eingesetzte thermoplastische Elastomer ist im Wesentlichen nicht beschränkt, sondern umfasst im Wesentlichen alle gängigen kommerziell erhältlichen thermoplastischen Elastomere. Es ist jedoch bevorzugt, wenn das mindestens eine thermoplastische Elastomer ausgewählt ist aus der Gruppe bestehend aus thermoplastischen Copolyamid (TPA-A), thermoplastischen Polyesterelastomer (TPE-E), Thermoplastische Elastomere auf Olefinbasis (TPE-O), Styrol-Blockcopolymere (TPE-S), Thermoplastische Elastomere auf Urethanbasis (TPE-U), Thermoplastische Vulkanisate oder vernetzte thermoplastische Elastomere auf Olefinbasis (TPE-V).

Das mindestens eine Elastomer umfasst besonders bevorzugt Ethylen-Propylen-Dien-Kautschuke (EPDM), Acrylnitril-Butadien-Kautschuken (NBR), Naturkautschuk (NR), Isobutylen-Isopren-Kautschuken (IIR) und/oder halogenierten Isobutylen-Isopren- Kautschuken (CIIR bzw. BIIR), sowie Mischungen, Verschnitte und Copolymere davon.

Der mindestens eine Kunststoff umfasst besonders bevorzugt Polyethylen (PE), ultrahochmolekulares Polyethylen (UPE), Tetrafluorethylen-Hexafluorpropylen-Vinylidenfluorid-Terpolymer (THV), Polyvinylidendifluorid (PVDF) und/oder Tetrafluorethylen-Hexafluorpropylen-Copolymer (FEP), sowie Mischungen und Copolymere davon.

Der erfindungsgemäße Schlauch oder die erfindungsgemäße Dichtung kann auch Mischungen von biobasierten, bioabbaubaren und/oder bio-attributed Polymere sowie den vorstehend beschriebenen (herkömmlichen) Polymeren umfassen.

Der erfindungsgemäße Schlauch oder die erfindungsgemäße Dichtung ist vorzugsweise dadurch gekennzeichnet, dass der mittels Röntgenstrahlung und/oder einem elektromagnetischen Feld detektierbare Stoff Metallpartikel, Metallfasern, Spinelle und/oder ferrimagnetische Keramik umfasst.

Metallpartikel können relativ einfach mittel Röntgenstrahlung detektiert werden.

Sollen die Metallpartikel neben oder anstelle der Röntgenstrahlung auch mittels eines elektromagnetischen Feldes detektiert werden, so ist es zweckmäßig, wenn die Metallpartikel ferromagnetische, ferrimagnetische, antiferromagnetische, paramagnetische und/oder superparamagnetische Eigenschaften aufweisen.

Metalle sind diejenigen chemischen Elemente, die sich im Gegensatz zu den Nichtmetallen im Periodensystem links der diagonalen Trennungslinie beginnend mit dem Element Beryllium (2. Gruppe) bis hin zum Polonium (16. Gruppe) befinden, sowie deren Legierungen und intermetallische Verbindungen mit charakteristischen metallischen Eigenschaften.

Diese Metalle können neben oder anstelle der Metallpartikel auch als Metallfasern vorliegen. Eine Faser ist ein lineares, elementares Gebilde, das aus mindestens einem Faserstoff, hier mindestens ein Metall, wie vorstehend definiert, besteht und eine äußere Faserform aufweist. Eine Faser ist ein im Verhältnis zu ihrer Länge relative dünnes, vorzugsweise flexibles Gebilde. Eine Faser weist vorzugsweise ein Verhältnis von Länge zu Durchmesser zwischen 5:1 und 10.000:1 auf.

Spinelle, vorzugsweise in Form von Partikeln, können relativ einfach mittels Röntgenstrahlung detektiert werden.

Sollen die Spinelle neben oder anstellte der Röntgenstrahlung auch mittels eines elektromagnetischen Feldes detektiert werden, so ist es zweckmäßig, wenn die Metallpartikel ferromagnetische, ferrimagnetische, antiferromagnetische, paramagnetische und/oder superparamagnetische Eigenschaften aufweisen.

Spinelle sind chemische Verbindungen des allgemeinen Typs [AₓB₂₋ₓ]Y₄, wobei A, B Metallkationen sind, deren Oxidationszahl die Summe 8 ergibt, und Y vorwiegend ein zweiwertiges Sauerstoff- bzw. Schwefel ist. A ist ein zweiwertiges Metallatom wie z.B. Mg, Fe, Zn, Mn, Co, Ni, Cu, Cd, B ist ein drei- oder vierwertiges Metall wie z. B. Al, Fe, V, Cr, Ti und x = 0-1.

Ferrimagnetische Keramiken gehören zu den oxidkeramischen Werkstoffen und weisen ferrimagnetische Eigenschaften auf, weshalb sie mittels eines elektromagnetischen Feldes detektierbar sind. Die Basis von ferrimagentischer Keramik bildet das Oxid des dreiwertigen Eisenkations Fe₂O₃, das mit Oxiden zweiwertiger Kationen Kristallstrukturen mit verschieden besetzten Untergittern und damit variable magnetische Eigenschaften bildet. Man unterscheidet weichmagnetische, hartmagnetische und Rechteckferrite. Sie basieren auf Kristallstrukturen, die sich isomorph zu den in der Natur vorkommenden Mineralien Granat (A²⁺3B³⁺₂[SiO₄]₃ mit A²⁺ = Mg²⁺, Fe²⁺, Mn²⁺, Ca²⁺ und B³⁺ = Al³⁺, Fe³⁺, Cr³⁺), Spinell (MgO·Al2O3), Magnetoplumbit (PbO·6Fe₂O₃) und Perowskit (CaO·TiO₂) verhalten.

Der erfindungsgemäße Schlauch oder die erfindungsgemäße Dichtung ist vorzugsweise dadurch gekennzeichnet, dass der mittels Röntgenstrahlung und/oder einem elektromagnetischen Feld detektierbare Stoff ein Mischoxid wenigstens zweier Metalle mit den Metallkomponenten Eisen, Kobalt, Nickel, Zinn, Zink, Mangan, Kupfer, Barium, Magnesium, Lithium oder Yttrium umfasst.

Vorzugsweise umfasst der mittels Röntgenstrahlung und/oder einem elektromagnetischen Feld detektierbare Stoff in dem erfindungsgemäßen Schlauch oder der erfindungsgemäßen Dichtung einen Stoff, der die allgemeinen Formel M^{II}(Fe^{III})₂O₄ aufweist, wobei M, Eisen, Kobalt, Nickel, Zinn, Zink, Mangan, Kupfer, Barium, Magnesium, Lithium oder Yttrium ist.

Besonders bevorzugt umfasst der mittels Röntgenstrahlung und/oder einem elektromagnetischen Feld detektierbare Stoff in dem erfindungsgemäßen Schlauch oder der erfindungsgemäßen Dichtung Fe^{II}(Fe^{III})₂O₄ , das auch unter dem Trivialnamen "Magnetit" bekannt ist.

Fe^{II}(Fe^{III})₂O₄ hat den Vorteil, dass es eine hohe chemische Beständigkeit aufweist, dass es magnetisch, insbesondere ferrimagnetisch, ist, dass es elektrisch leitfähig ist, dass es LBM-Zulassungen hat, dass es als natürlich vorkommendes Material nicht giftig, dass es kostengünstig ist und dass es mittels magnetischer Detektion und Röntgendetektion erfassbar ist.

Der erfindungsgemäße Schlauch oder die erfindungsgemäße Dichtung ist vorzugsweise dadurch gekennzeichnet, dass der mittels Röntgenstrahlung und/oder einem elektromagnetischen Feld detektierbare Stoff in einer Menge von 0,5 bis 80 Gew.-%, bevorzugt von 2,5 bis 60 Gew.-%, bezogen auf das Gesamtgewicht der jeweiligen Schlauchschicht (detektierbare Schicht) bzw. Dichtungsschicht (detektierbare Schicht), in dieser Schlauchschicht bzw. Dichtungsschicht vorliegt.

Wie oben ausgeführt, kann der erfindungsgemäße Schlauch oder die erfindungsgemäße Dichtung auch einen mehrschichtigen Schlauch oder eine mehrschichtige Dichtung darstellen. Wenn es sich bei dem erfindungsgemäßen Schlauch oder der erfindungsgemäßen Dichtung um einen mehrschichtigen Schlauch bzw. eine mehrschichtige Dichtung handelt, so ist es bevorzugt, dass der berührungslos detektierbare Marker, der mindestens einen mittels Röntgenstrahlung und/oder einem elektromagnetischen Feld detektierbare Stoff umfasst, mindestens in der innersten Schicht des mehrschichtigen Schlauches bzw. der mehrschichtigen Dichtung vorliegt.

Dies hat den Vorteil, dass die Abnutzung des Schlauchmaterials bzw. des Dichtungsmaterials, das in direktem Kontakt mit dem Medium steht, das durch den Schlauch bzw. durch die Dichtung geleitet wird, unmittelbar durch die Detektion des mindestens einen berührungslos detektierbaren Markers erfasst werden kann.

Es sind auch Ausführungsformen des erfindungsgemäßen Schlauches oder der erfindungsgemäßen Dichtung denkbar, in denen der mindestens eine berührungslos detektierbare Marker in einer Zwischenschicht, die nicht die innerste und nicht die äußerste Schicht darstellt vorliegt. Dies hat den Vorteil, dass der mindestens eine berührungslos detektierbare Marker zur Detektion der Abnutzung (Abriebindikator) benutzt werden kann. Sollte die Innenschicht komplett abgerieben sein, würden die ersten berührungslos detektierbaren Markerpartikel detektiert werden können, so dass der Anwender erkennen kann, dass der Schlauch bzw. die Dichtung zu tauschen ist.

Die Wandstärke/Dicke des Schlauches bzw. der Dichtung, bzw. die Wandstärke/Dicke der einzelnen Schichten ist nicht beschränkt. Die geeignete Wandstärke/Dicke des Schlauches bzw. der Dichtung, bzw. die Wandstärke/Dicke der einzelnen Schichten wird der Fachmann je nach der geplanten Verwendung des Schlauches bzw. der Dichtung und den damit verbundenen Anforderungen anpassen.

Es ist jedoch bevorzugt, wenn die innerste Schicht des Schlauches oder der Dichtung, die vorzugsweise den mindestens einen berührungslos detektierbaren Marker umfasst, eine Wandstärke/Dicke von 0,03 bis 30 mm aufweist.

Der erfindungsgemäße Schlauch oder die erfindungsgemäße Dichtung umfasst vorzugsweise die üblichen in der Kunststoff- bzw. Elastomerindustrie verwendeten Additive. Diese umfassen beispielsweise Additive ausgewählt aus der Gruppe bestehend aus Siliziumdioxid (Silica/Kieselsäure), Kaolin, Titandioxid, Fettsäuren, Weichmacher, Gleitmittel, Geruchsabsorber, antimikrobielle Substanzen, organische + anorganische Farbpigment, Haftvermittler, Verarbeitungshilfsmittel, Flammschutzmittel, Alterungsschutzmittel, Metalloxide+ Metallhydroxide, Verzögerer, Aktivatoren, Faktis, Graphit, Carbon Nanotubes, Kohlefasern und/oder Ruß.

Insbesondere können rückgewonnener Ruß (rCB) und/oder nachhaltige Öle aus erneuerbaren Quellen (als Teil des nachhaltigen Rohstoffs) mit den Polymeren vermischt werden. Der wiedergewonnene Ruß kann aus jeder geeigneten Quelle stammen, wie etwa, aber nicht beschränkt auf, Altreifen, Dachmembranabfall, Förderbandabfall und/oder Schlauchabfall.

Nachhaltige Öle können aus jeder geeigneten Quelle stammen, wie z. B., aber nicht beschränkt auf, Recycling von Automobilmotoröl, biologisch gewonnene Öle wie Maisöl, Kokosnussöl, Rapsöl, Sojaöl, Pflanzenöl usw. und dergleichen.

Beispielsweise geeignete Additive umfassen aus Pflanzenbestandteilen hergestellte paraffinische Weichmacher, wie beispielsweise Viva-B-Fix 10227 der Firma H+R. Ferner als Additiv geeignet ist eine Kieselsäure, die aus Reisschalen hergestellt wird (Oryzasil HD 165MP, Oryzasil; oder K16, Wilmar) oder CaCOs, das aus Eierschalen gewonnen wird.

Diese Additive liegen vorzugsweise jeweils in einer Menge von 0,1 bis 80 Gew.-%, insbesondere von 0,1 bis 60 Gew.-%, bezogen auf das Gesamtgewicht der jeweiligen Schlauchschicht bzw. Dichtungsschicht, in dieser vor.

Die erfindungsgemäßen Schläuche oder die erfindungsgemäßen Dichtungen können über die üblichen in der Schlauchherstellung bzw. Dichtungsherstellung bekannten Verfahren hergestellt werden, wie beispielsweise durch Extrusion oder Wickelverfahren, wie sie beispielsweise im Buch "Kautschuktechnologie" von Röthemeyer/Sommer (3. Auflage. 10/2013) beschrieben sind.

Die Verarbeitung der vorstehend genannten Polymere zu den entsprechenden Dichtungen erfolgt vorzugsweise mit den bekannten und üblichen, dem Fachmann vertrauten Maschinen und Verfahren, wie Spritzguss, Extrusion, Sintern, Vulkanisation und/oder Stanzen.

Die vorliegende Erfindung betrifft außerdem die Verwendung eines berührungslos detektierbaren Markers, der mindestens einen mittels Röntgenstrahlung und/oder einem elektromagnetischen Feld detektierbare Stoff umfasst, zur Detektion der Abnutzung eines Schlauches oder einer Dichtung, wie vorstehend beschrieben.

Bei der Verwendung eines berührungslos detektierbaren Markers, der mindestens einen mittels Röntgenstrahlung und/oder einem elektromagnetischen Feld detektierbare Stoff umfasst, zur Detektion der Abnutzung eines Schlauches oder einer Dichtung, wie vorstehend beschrieben, ist es bevorzugt, dass der mindestens eine mittels Röntgenstrahlung und/oder einem elektromagnetischen Feld detektierbare Stoff zur Detektion der Abnutzung des Schlauches oder einer Dichtung mindestens einen mittels Röntgenstrahlung und/oder einem elektromagnetischen Feld detektierbare Stoff mit einer Partikelgröße von 0,2 bis 500 µm, bevorzugt von 0,25 bis 300 µm, umfasst.

Der mindestens eine mittels Röntgenstrahlung und/oder einem elektromagnetischen Feld detektierbare Stoff ist wie vorstehend definiert zu verstehen.

Als Detektor wird hierbei vorzugsweise ein übliches Röntgengerät und/oder ein übliches Metallsuchgerät, auf elektromagnetischer Basis arbeitend, eingesetzt. Geeignete Detektoren werden beispielsweise von der Pulsotronic Anlagentechnik vertrieben.

Die vorliegende Erfindung betrifft auch ein Verfahren zur Detektion der Abnutzung eines Schlauches oder einer Dichtung wie vorstehend definiert, umfassend den Schritt des Detektierens des berührungslos detektierbaren Markers, der mindestens einen mittels Röntgenstrahlung und/oder einem elektromagnetischen Feld detektierbare Stoff umfasst, mit einem Detektor, bevorzugt in einem Medium, das den Schlauch bzw. die Dichtung durchlaufen hat.

Es ist bevorzugt das erfindungsgemäße Verfahren in der Lebensmittel-, Trinkwasser und/oder pharmazeutischen Industrie anzuwenden. Gemäß dem erfindungsgemäßen Verfahren kann die Abnutzung der verwendeten Schläuche oder Dichtungen und die damit verbundenen Kontamination der Medien, die die Schläuche bzw. Dichtungen durchlaufen mit Partikeln des Schlauchmaterials bzw. des Dichtungsmaterials frühzeitig erkannt und damit beseitigt werden.

In dem erfindungsgemäßen Verfahren ist es bevorzugt, dass der mindestens eine mittels Röntgenstrahlung und/oder einem elektromagnetischen Feld detektierbare Stoff, mindestens einen mittels Röntgenstrahlung und/oder einem elektromagnetischen Feld detektierbare Stoff mit einer Partikelgröße von 0,2 bis 500 µm, bevorzugt von 0,25 bis 300 µm und besonders bevorzugt von 2 bis 150 µm umfasst.

Das Verfahren ist ferner vorzugsweise dadurch gekennzeichnet, dass der Detektor ein übliches Röntgengerät und/oder ein übliches Metallsuchgerät, auf elektromagnetischer Basis arbeitend, ist. Geeignete Detektoren werden beispielsweise von der Pulsotronic Anlagentechnik vertrieben.

Die Erfindung wird nachfolgend anhand von Beispielen erläutert. Die Beispiele dienen dabei lediglich der Illustration der Erfindung und sind in keiner Weise beschränkend.

### Beschreibung der Figuren

Figur 1: Vergleich einer Vulkanisationskurve, MDR 150°C, 60 min, einer Kautschukmischung mit Weißöl (nicht Bio; schwarz) mit einer Kautschukmischung mit Bio Weißöl (grau).
Figur 2: Vergleich einer Vulkanisationskurve, MDR 150°C, 60 min, einer Kautschukmischung mit Silica (nicht Bio; schwarz) mit einer Kautschukmischung mit Bio Silica (grau).
Figur 3: Vergleich einer Vulkanisationskurve, MDR 150°C, 60 min, einer EPDM mit EPDM (nicht Bio; schwarz) mit einer Kautschukmischung mit Teil-Bio EPDM (grau).
Figur 4: Vergleich einer Vulkanisationskurve, MDR 150°C, 60 min, einer EPDM mit Teil-Bio EPDM (schwarz) mit einer Kautschukmischung mit Bio EPDM (grau).

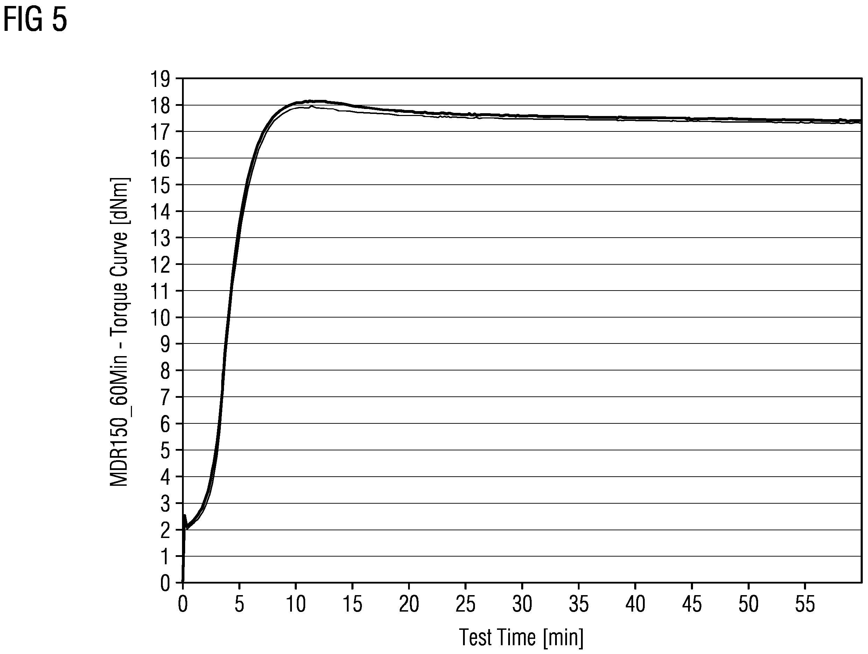

Figur 5: Vergleich einer Vulkanisationskurve, MDR 150°C, 60 min, einer Kautschukmischung mit Kreide (nicht Bio; schwarz) mit einer Kautschukmischung mit Bio-Kreide (grau).

### Beispiele

In den nachfolgenden Beispielen wurden jeweils zwei Prüfkörper aus zwei verschiedenen Kautschukmischungen hergestellt, die sich jeweils nur darin unterscheiden, dass ein Bestandteil einmal biobasiert, biologisch abbaubar und/oder bio-attributed ist und einmal nicht.

Die Vergleiche zeigen, dass sich die beiden Prüfkörper in ihren physikalischen Eigenschaften jeweils kaum unterscheiden.

### Beispiel 1

### Weißöl:

Es wurden zwei Prüfkörper aus zwei Kautschukmischungen hergestellt, die sich lediglich in der Art des zugesetzten Weißöls unterscheiden.

Die physikalischen Eigenschaften der Prüfkörper wurden bestimmt und sind in der nachfolgenden Tabelle wiedergegeben.

| **Zusammensetzung [phr]:** | | **Mischung A Referenz** | **Mischung B Bio** |
|---|---|---|---|
| | | mit Shell Ondina (nicht bio) | mit Vivaspes 10227 (bio) |
| EPDM | | 100 | 100 |
| Weißöl | | 11 | 0 |
| Weißöl Bio | | 0 | 11 |
| Füllstoffe | | 218,2 | 218,2 |
| Vernetzer | | 4 | 4 |
| | | | |

| **Physikalische Werte:** | | | |
|---|---|---|---|
| Dichte | g/cm³ | 1,671 | 1,67 |
| Härte | Shore A | 73 | 73 |
| Reißfestigkeit | MPa | 12,2 | 10,8 |
| Reißdehnung | % | 515 | 506 |
| Modul 100% | MPa | 2,3 | 2,1 |
| Abrieb | mm³ | 449 | 453 |
| DVR (25%; 72h/RT) | % | 34 | 34 |
| DVR (25%; 24h/100°C) | % | 62 | 63 |

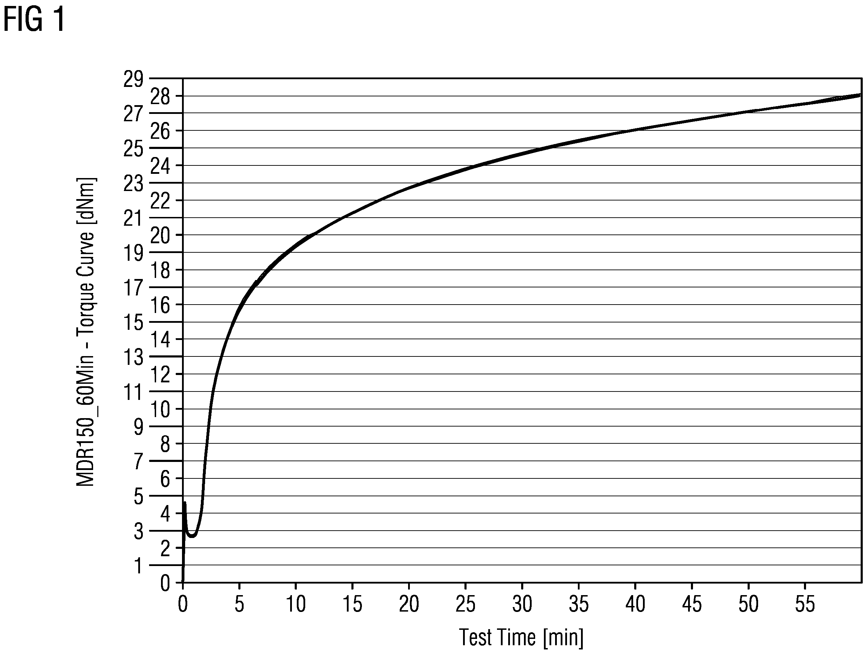

Eine Vulkanisationskurve, MDR 150°C, 60 min, der beiden Mischungen, wobei die schwarze Kurve die herkömmliche Mischung und die graue die Bio-Mischung darstellt ist in Figur 1 gezeigt.

### Beispiel 2

### Kieselsäure:

Es wurden zwei Prüfkörper aus zwei Kautschukmischungen hergestellt, die sich lediglich in der Art der zugesetzten Kieselsäure unterscheiden.

Die physikalischen Eigenschaften der Prüfkörper wurden bestimmt und sind in der nachfolgenden Tabelle wiedergegeben.

| **Zusammensetzung [phr]:** | | **Mischung A Referenz** | **Mischung B Bio** |
|---|---|---|---|
| | | mit Ultrasil VN3 (nicht bio) | mit Oryzasil 175MP (bio) |
| EPDM | | 100 | 100 |
| Silica | | 34 | 0 |
| Silica Bio | | 0 | 34 |
| Füllstoffe | | 90,9 | 90,9 |
| Vernetzer | | 4,5 | 4,5 |
| | | | |

| **Physikalische Werte:** | | | |
|---|---|---|---|
| Dichte | g/cm³ | 1,337 | 1,324 |
| Härte | Shore A | 68 | 70 |
| Reißfestigkeit | MPa | 15,7 | 15 |
| Reißdehnung | % | 560 | 553 |
| Modul 100% | MPa | 2 | 2 |
| Abrieb | mm³ | 301 | 281 |
| DVR (25%; 72h/RT) | % | 24 | 25 |
| DVR (25%; 24h/100°C) | % | 60 | 61 |

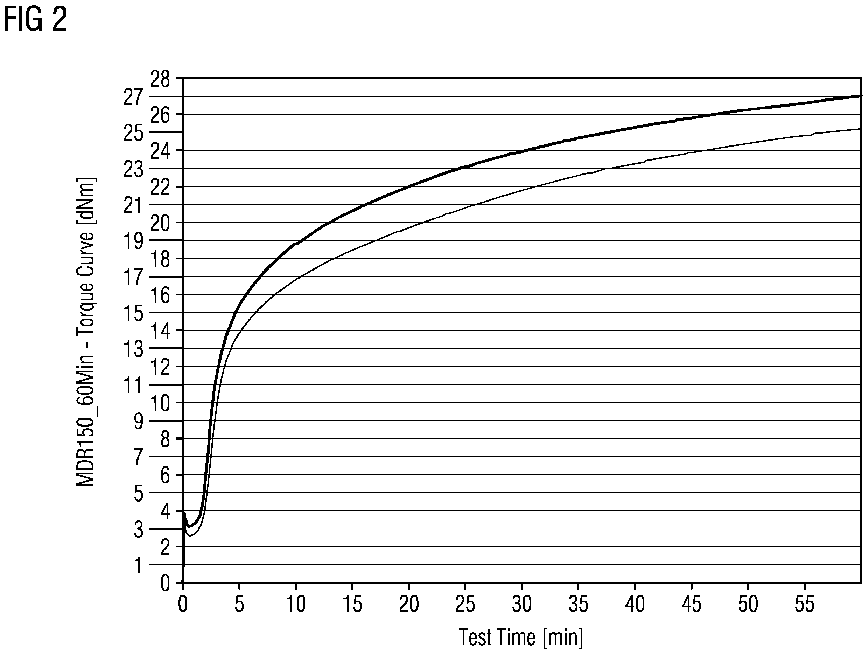

Eine Vulkanisationskurve, MDR 150°C, 60 min, der beiden Mischungen, wobei die schwarze Kurve die herkömmliche Mischung und die graue die Bio-Mischung darstellt ist in Figur 2 gezeigt.

### Beispiel 3

### EPDM 1:

Es wurden zwei Prüfkörper aus zwei Kautschukmischungen hergestellt, die sich lediglich in der Art des EPDM unterscheiden.

Die physikalischen Eigenschaften der Prüfkörper wurden bestimmt und sind in der nachfolgenden Tabelle wiedergegeben.

| **Zusammensetzung [phr]:** | | **Mischung A Referenz** | **Mischung B Bio** |
|---|---|---|---|
| | | mit Nordel IP 5565 (nicht bio) | mit Keltan ECO 6950 (bio) |
| EPDM 1 | | 70 | 70 |
| EPDM 2 | | 30 | 0 |
| EPDM 2 Bio | | 0 | 30 |
| Füllstoffe | | 316,5 | 316,5 |
| Vernetzer | | 4,5 | 4,5 |
| | | | |

| **Physikalische Werte:** | | | |
|---|---|---|---|
| Dichte | g/cm³ | 1,394 | 1,385 |
| Härte | Shore A | 55 | 55 |
| Reißfestigkeit | MPa | 8 | 8,2 |
| Reißdehnung | % | 662 | 693 |
| Modul 100% | MPa | 1,3 | 1,2 |
| Abrieb | mm³ | 327 | 343 |
| DVR (25%; 72h/RT) | % | 23 | 24 |
| DVR (25%; 24h/100°C) | % | 61 | 67 |

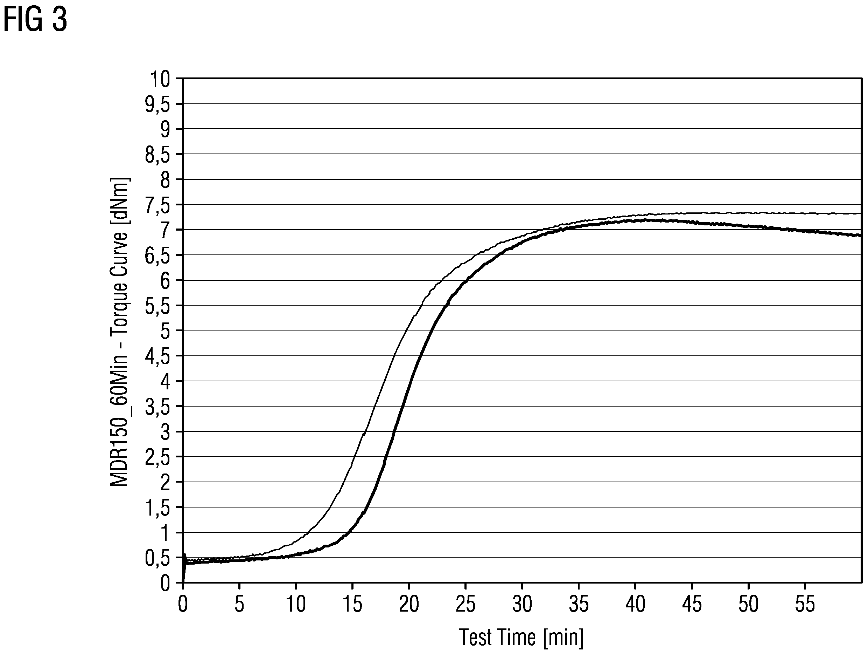

Eine Vulkanisationskurve, MDR 150°C, 60 min, der beiden Mischungen, wobei die schwarze Kurve die herkömmliche Mischung und die graue die Bio-Mischung darstellt ist in Figur 3 gezeigt.

### Beispiel 4

### EPDM 2:

Es wurden zwei Prüfkörper aus zwei Kautschukmischungen hergestellt, die sich lediglich in der Art des EPDM unterscheiden.

Die physikalischen Eigenschaften der Prüfkörper wurden bestimmt und sind in der nachfolgenden Tabelle wiedergegeben.

| **Zusammensetzung [phr]:** | | **Mischung A Referenz** | **Mischung B Bio** |
|---|---|---|---|
| | | mit Keltan ECO 5470 + Nordel IP 5565 (halb bio) | mit Keltan ECO 5470+ Keltan ECO 6950 (bio) |
| EPDM 1 | | 70 | 70 |
| EPDM 2 halb Bio | | 30 | 0 |
| EPDM 2 Bio | | 0 | 30 |
| Füllstoffe | | 316,5 | 316,5 |
| Vernetzer | | 4,5 | 4,5 |
| | | | |

| **Physikalische Werte:** | | | |
|---|---|---|---|
| Dichte | g/cm³ | 1,379 | 1,383 |
| Härte | Shore A | 54 | 54 |
| Reißfestigkeit | MPa | 9,3 | 10 |
| Reißdehnung | % | 749 | 740 |
| Modul 100% | MPa | 1,2 | 1,2 |
| Abrieb | mm³ | 376 | 346 |
| DVR (25%; 72h/RT) | % | 29 | 27 |
| DVR (25%; 24h/100°C) | % | 70 | 68 |

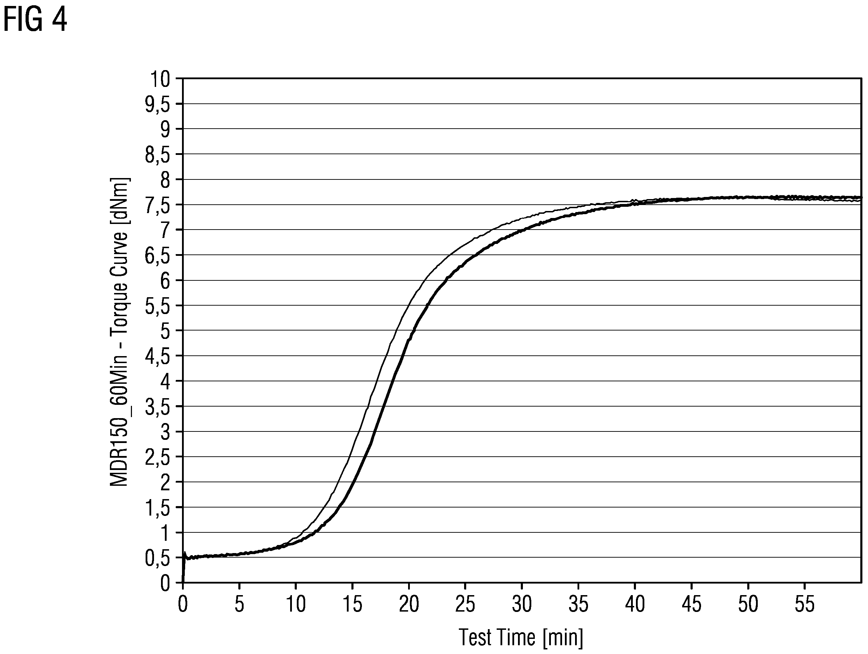

Eine Vulkanisationskurve, MDR 150°C, 60 min, der beiden Mischungen, wobei die schwarze Kurve die herkömmliche Mischung und die graue die Bio-Mischung darstellt ist in Figur 4 gezeigt.

### Beispiel 5:

### CaCOs (Kreide):

Es wurden zwei Prüfkörper aus zwei Kautschukmischungen hergestellt, die sich lediglich in der Art des zugesetzten CaCOs unterscheiden.

Die physikalischen Eigenschaften der Prüfkörper wurden bestimmt und sind in der nachfolgenden Tabelle wiedergegeben.

| **Zusammensetzung [phr]:** | | **Mischung A Referenz** | **Mischung B Bio** |
|---|---|---|---|
| | | mit Kreide (nicht bio) | mit Omyaloop 2-AV (bio) |
| NBR | | 100 | 100 |
| Kreide | | 21 | 0 |
| Kreide Bio | | 0 | 21 |
| Füllstoffe | | 190,9 | 190,9 |
| Vernetzer | | 7,1 | 7,1 |
| | | | |

| **Physikalische Werte:** | | | |
|---|---|---|---|
| Dichte | g/cm³ | 1,85 | 1,845 |
| Härte | Shore A | 75 | 74 |
| Reißfestigkeit | MPa | 10,1 | 9,3 |
| Reißdehnung | % | 565 | 561 |
| Modul 100% | MPa | 3 | 2,8 |
| Abrieb | mm³ | 372 | 356 |
| DVR (25%; 72h/RT) | % | 29 | 28 |
| DVR (25%; 24h/100°C) | % | 36 | 37 |

Eine Vulkanisationskurve, MDR 150°C, 60 min, der beiden Mischungen, wobei die schwarze Kurve die herkömmliche Mischung und die graue die Bio-Mischung darstellt ist in Figur 4 gezeigt.

## Patentansprüche

1. Schlauch oder Dichtung, umfassend mindestens eine Schicht, die mindestens einen berührungslos detektierbaren Marker umfasst, wobei der berührungslos detektierbare Marker mindestens einen mittels Röntgenstrahlung und/oder einem elektromagnetischen Feld detektierbaren Stoff umfasst, **dadurch gekennzeichnet, dass** der Schlauch oder die Dichtung mindestens einen biobasierten, biologisch abbaubaren und/oder bio-attributed Rohstoff umfasst.

2. Schlauch oder Dichtung gemäß Anspruch 1, **dadurch gekennzeichnet, dass** der Schlauch oder die Dichtung einen einschichtigen Schlauch oder eine einschichtige Dichtung oder einen mehrschichtigen Schlauch oder eine mehrschichtige Dichtung darstellt.

3. Schlauch oder Dichtung gemäß irgendeinem der vorhergehenden Ansprüche, **dadurch gekennzeichnet, dass** der berührungslos detektierbare Marker mindestens einen mittels Röntgenstrahlung und/oder einem elektromagnetischen Feld detektierbaren Stoff mit einer mittleren Partikelgröße d₉₀ ermittelt nach der Cyclosizer Methode gemäß DIN EN ISO 1248:2008-06 von 0,2 bis 500 µm, bevorzugt von 0,25 bis 300 µm und besonders bevorzugt von 2 bis 150 µm umfasst.

4. Schlauch oder Dichtung gemäß irgendeinem der vorhergehenden Ansprüche, **dadurch gekennzeichnet, dass** der biobasierte und/oder bio-attributed Rohstoff mindestens ein Polymer, vorzugsweise ein Kunststoff, ein Kautschuk, ein Elastomer und/oder ein thermoplastisches Elastomer umfasst.

5. Schlauch oder Dichtung gemäß irgendeinem der vorhergehenden Ansprüche, **dadurch gekennzeichnet, dass** der biologisch abbaubare Rohstoff mindestens ein biologisch abbaubares Polymer, vorzugsweise ausgewählt aus der Gruppe, umfassend Polyhydroxyalkanoat, Polycaprolacton, Polymilchsäure, Polybutylensuccinat, Polybutylensuccinat-co-butylenadipat, Polybutylenadipatterephthalat, Mischungen aus zwei oder mehrere der zuvor genannten Polymere und Reaktionsprodukte von zwei oder mehr der zuvor genannten Polymere.

6. Schlauch oder Dichtung gemäß irgendeinem der vorhergehenden Ansprüche, **dadurch gekennzeichnet, dass** der Schlauch oder die Dichtung einen Druckträger, insbesondere ein Garn und/oder ein Geflecht.

7. Schlauch oder Dichtung gemäß Anspruch 6, **dadurch gekennzeichnet, dass** der Druckträger mindestens eine biobasierten, biologisch abbaubaren und/oder bio-attributed Faser, vorzugsweise eine Naturfaser und/oder eine Polymilchsäurefaser, umfasst.

8. Schlauch oder Dichtung gemäß irgendeinem der vorhergehenden Ansprüche, **dadurch gekennzeichnet, dass** der mittels Röntgenstrahlung und/oder einem elektromagnetischen Feld detektierbare Stoff Metallpartikel, Metallfasern, Spinelle und/oder ferrimagnetische Keramik, vorzugsweise ein Mischoxid wenigstens zweier Metalle mit den Metallkomponenten Eisen, Kobalt, Nickel, Zinn, Zink, Mangan, Kupfer, Barium, Magnesium, Lithium oder Yttrium, insbesondere gemäß der allgemeinen Formel M^{II}(Fe^{III})₂O₄ aufweist, wobei M Eisen, Kobalt, Nickel, Zinn, Zink, Mangan, Kupfer, Barium, Magnesium, Lithium oder Yttrium ist, umfasst.

9. Schlauch oder Dichtung gemäß irgendeinem der vorhergehenden Ansprüche, **dadurch gekennzeichnet, dass** der mittels Röntgenstrahlung und/oder einem elektromagnetischen Feld detektierbare Stoff in einer Menge von 0,5 bis 80 Gew.- %, bevorzugt von 2,5 bis 60 Gew.-%, bezogen auf das Gesamtgewicht der jeweiligen Schlauchschicht bzw. Dichtungsschicht, in dieser Schlauchschicht bzw. Dichtungsschicht vorliegt.

10. Schlauch oder Dichtung gemäß irgendeinem der Ansprüche 2 bis 9, **dadurch gekennzeichnet, dass** der berührungslos detektierbare Marker, der mindestens einen mittels Röntgenstrahlung und/oder einem elektromagnetischen Feld detektierbaren Stoff umfasst, mindestens in der innersten Schicht des mehrschichtigen Schlauches oder der mehrschichtigen Dichtung vorliegt.

11. Schlauch oder Dichtung gemäß irgendeinem der Ansprüche 2 bis 9, **dadurch gekennzeichnet, dass** der berührungslos detektierbare Marker, der mindestens einen mittels Röntgenstrahlung und/oder einem elektromagnetischen Feld detektierbaren Stoff umfasst, mindestens in einer Schicht des mehrschichtigen Schlauches oder der mehrschichtigen Dichtung vorliegt, die nicht die innerste Schicht ist.

12. Verwendung eines berührungslos detektierbaren Markers, der mindestens einen mittels Röntgenstrahlung und/oder einem elektromagnetischen Feld detektierbaren Stoff umfasst, zur Detektion der Abnutzung eines Schlauches oder einer Dichtung gemäß irgendeinem der Ansprüche 1 bis 11.

13. Verwendung gemäß Anspruch 12, **dadurch gekennzeichnet, dass** der mindestens eine mittels Röntgenstrahlung und/oder einem elektromagnetischen Feld detektierbare Stoff zur Detektion der Abnutzung des Schlauches oder einer Dichtung bevorzugt mindestens einen mittels Röntgenstrahlung und/oder einem elektromagnetischen Feld detektierbaren Stoff mit einer Partikelgröße d₉₀ ermittelt nach der Cyclosizer Methode gemäß DIN EN ISO 1248:2008-06 von 0,2 bis 500 µm, bevorzugt von 0,25 bis 300 µm und besonders bevorzugt von 2 bis 150 µm, umfasst.

14. Verfahren zur Detektion der Abnutzung eines Schlauches oder einer Dichtung gemäß irgendeinem der Ansprüche 1 bis 11, umfassend den Schritt des Detektierens des berührungslos detektierbaren Markers, der mindestens einen mittels Röntgenstrahlung und/oder einem elektromagnetischen Feld detektierbaren Stoff umfasst, mit einem Detektor, bevorzugt in einem Medium, das den Schlauch bzw. die Dichtung durchlaufen hat.

15. Verfahren zur Detektion gemäß Anspruch 14, **dadurch gekennzeichnet, dass** der mindestens eine mittels Röntgenstrahlung und/oder einem elektromagnetischen Feld detektierbaren Stoff, mindestens einen mittels Röntgenstrahlung und/oder einem elektromagnetischen Feld detektierbaren Stoff mit einer mittleren Partikelgröße d₉₀ ermittelt nach der Cyclosizer Methode gemäß DIN EN ISO 1248:2008-06 von 0,2 bis 500 µm, bevorzugt von 0,25 bis 300 µm und besonders bevorzugt von 2 bis 150 µm umfasst.
